Europäisches Patentamt

European Patent Office

Office européen des brevets

(11) Publication number: **0 074 301**
**A2**

## (12) EUROPEAN PATENT APPLICATION

(21) Application number: 82401561.4

(22) Date of filing: 20.08.82

(51) Int. Cl.³: **G 01 D 5/20**

(30) Priority: 28.08.81 US 297399

(43) Date of publication of application:
16.03.83 Bulletin 83/11

(84) Designated Contracting States:
DE FR GB IT SE

(71) Applicant: THE BENDIX CORPORATION
Executive Offices Bendix Center
Southfield Michigan 48037(US)

(72) Inventor: Arnett, Samuel Emerson
61353 Miami Road
South Bend Indiana 46614(US)

(74) Representative: Huchet, André et al,
Service Brevets Bendix 44, rue François 1er
F-75008 Paris(FR)

(54) Linear position sensor.

(57) A linear position sensor (10) is disclosed. The sensor (10) includes a periodically driven excitation coil (56) and a similarly wound reference coil (54) both disposed about an armature member (30). The excitation coil (56) generates a rate of change flux which is controlled by the reference coil (54) and a feedback circuit. The excitation flux induces a field in a sensing coil (58) which develops a voltage Vs modulated by the number of coil turns that the armature (30) penetrates. The voltage is then demodulated to yield a measurement of the penetration of the armature with respect to a reference position.

FIG. 2

EP 0 074 301 A2

## LINEAR POSITION SENSOR

The invention relates to a linear position sensor and, more particularly, to a linear position sensor of the variable inductance type.

Linear position sensors are generally known and have been incorporated into control systems for positioning servo mechanisms. The control systems specify a desired position for the servo and obtain information as to its actual position by means of the linear position sensor. Corrections in the actual position can then be made pursuant to a control law to narrow the difference between the values of the actual and desired position.

The linear position sensor is termed such because it measures the position of an actuated element along a single axis or line. One of the better known sensors of this type is the LVDT or linearly variable differential transformer. The common LVDT device is a variable inductance mechanism comprising three coils in a balanced bridge configuration. A movable armature defining the line along which the actuated element has motion is used to increase the inductance in one coil while simultaneously decreasing the inductance in a second coil. Since an excitation has been applied to the balance coils in the configuration a differential signal can be sensed across the variable inductance coils.

The common linearly variable differential transformer, however, does exhibit some frequency and temperatue sensitivity which makes them less accurate than desirable. Further, the number of turns on each winding must be exact and of similar size to the other windings or the output of the sensor will be nonlinear with respect to position.

To overcome the difficiencies of the prior art, the invention provides a linear position sensor comprising an excitation coil, disposed around a movable armature, which has applied an alternating excitation signal thereto; a reference coil for sensing the amount of flux generated by the excitation coil; means, responsive to said reference coil, for varying the excitation signal such that the flux produced by said excitation coil remains relatively constant; a sensing coil adapated to receive the movable armature and generate a position signal proportional to the number of turns penetrated into the sensing coil by the armature; and means for demodulating the position signal into a DC voltage proportional to the position of the armature.

One advantage of the invention when implemented in such a manner is a decrease in size along its longitudinal axis as compared to a common LVDT. The LVDT, because of its balanced bridge configuration and three coils, is generally on the order of twice the length of the stroke it measures. Since the excitation coil and reference coil of the present invention are closely coupled magnetically, they can be made quite compact. Thereby the sensing coil is required to be only long enough to measure the actuator stroke. Thus, the overall length of the sensor can be compacted to substantially one inch plus the length of the sensing coil which is about .6 the length of a comparable LVDT for a stroke of 1.5 inch.

Further, because of the tubular shape of the sensor and its compact size, it can be incorporated into a hollow actuator element of a fluid servo-mechanism with facility. The compact short length permits the stroke length of the actuator to be fully measured without unduly increasing the size of the servomechanism containing it. The reduction in servo size provides a significant weight savings in the larger electrohydraulic element.

The means for varying the excitation signal additionally comprises a current amplifier which has the reference coil as part of its negative feedback loop. An alternating signal from an oscillator drives the current amplifier to output the excitation signal. When the flux increases beyond a predetermined amount the reference coil detects the increase and lowers the oscillator drive signal. Conversely, decreases in the flux output from the excitation coil will cause an increase in the driving signal to the current amplifier.

An advantage is this feedback system that produces a commanded flux value is less susecptible to temperature and frequency variation thereby providing a position signal that varies linearly with the number of turns of the sensing coil penetrated by the moveable armature.

In a preferred implementation of the sensor, the demodulating means inputs its DC voltage to an analog to digital converter. The analog to digital converter is of the type where the digital output is dependent upon a reference voltage. The reference voltage is additionally fed to the oscillator to yield a drive signal proportional in amplitude to the reference voltage. By this means a ratiometric relationship is maintained between the sensor output and the digital number from the A/D converter when the reference voltage changes. Advantageously, this produces a system that is still further less susceptible to temperature drift.

The manner of carrying out the invention is described in detail below with reference to the drawings which illustrate the preferred embodiment of the invention wherein:

Figure 1 is a partially sectioned elevational view of a servomechanism including a linear position sensor 10 which is constructed in accordance with the invention;

Figure 2 is a cross-sectional view of the linear position sensor illustrated in Figure 1 taken along line 2-2;

Figure 3 is a cross-sectional end view of the linear position sensor illustrated in Figure 2, taken along line 3-3;

Figure 4 is a system block diagram of an excitation and demodulation circuit for the linear position sensor illustrated in Figures 1, 2, and 3;

Figure 5 is a detailed electrical schematic view of the filter and demodulator circuit illustrated in Figure 4;

Figure 6 is a detailed electrical schematic view of a self-excited implementation of the oscillator illustrated in Figure 4; and

Figure 7 is a detailed electrical schematic view of a second implementation of the filter and demodulator circuit illustrated in Figure 4.

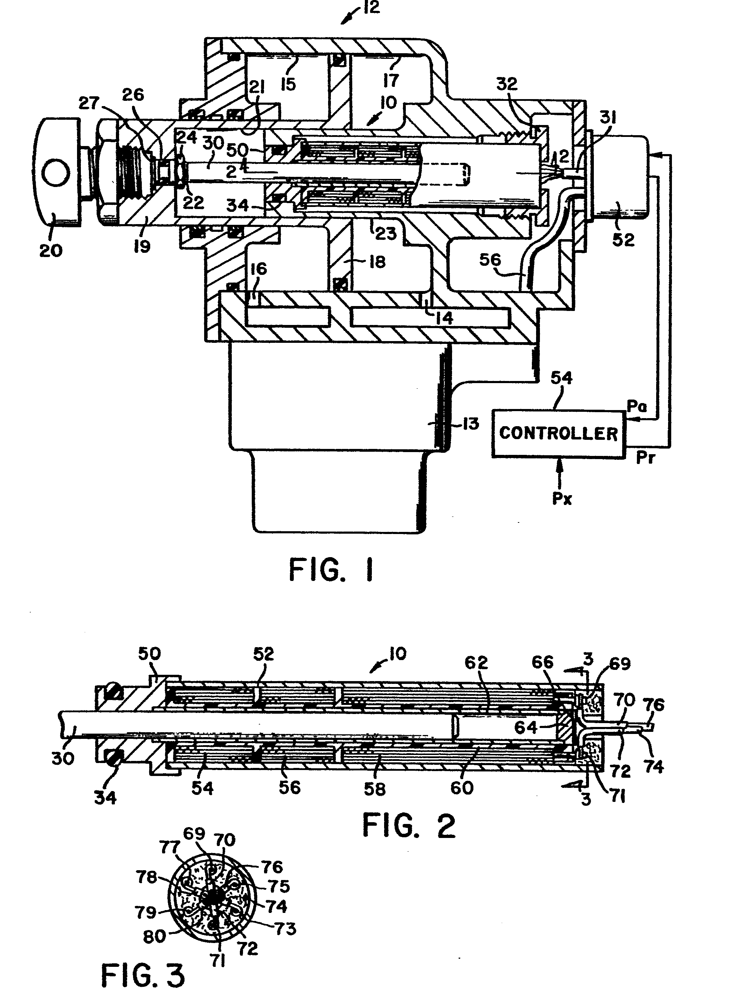

With respect now to Figure 1, there is shown a servo-mechanism 12 which moves an actuated element such as clevis 20 in response to electrical commands of a controller 54. The controller 54 receives an input signal Px representative of the desired position of the actuated element and an input signal Pa representative of the actual position of the actuated element. The difference between these two position signals represents the magnitude and direction that the actuated element should be moved. The controller 54 actuates the servomechanism 12 to move in a direction to reduce the difference between Pa and Px.

The particular servomechanism illustrated is electro-hydraulically actuated by the output signal Pr of the controller activating solenoid valves (not shown) located in a body portion 13. The output signal Pr is communicated to the solenoids via a cable 56 from a connector housing 52. The solenoids open and close valves to pressurize and vent variable volume chambers 15 and 17 through ports 14 and 16, respectively. By providing a differential pressure between the chambers, a force is generated to cause piston 18 to slide in the direction of the lower pressure. The piston movement results in a movement of the clevis 20 which is attached thereto by a stud threaded into a bore of a cylindrical body portion 19 of piston 18.

The controller receives the actual position signal Pa of the actuated element as the output of a linear position sensor 10 which forms the invention of the present application. The sensor 10 generates an electrical signal which is preferably converted into a digital number N which is then transmitted to the controller 54 as the actual position signal Pa. In the implementation illustrated excitation and demodulation circuitry for the sensor 10 can be contained within connector housing 52. This circuitry, which will be more fully described hereinafter, communicates with the sensor via cable 31 to translate the position of the actuated element into a usable electrical signal.

The position sensor 10 is generally tubular in shape with a central sensing bore. A rod-like armature 30 of generally permeable material penetrates the central bore and is attached to the piston assembly by insertion through a stepped aperture in the body portion 19 to where it is stopped by flange 27 at a step. The armature is secured in position by a nut 24 tightened against the floor of a bore 21 in the body portion 19. This attachment of the armature 30 provides a concentric positioning along a linear axis of piston movement. The determination of the amount of penetration of the armature 30 within the sensor is thus an indication of the linear movement of the actuated element along this axis.

The sensor 10 is mounted in the servomechanism by being received within a central bore of an outwardly extending boss 23 that partially intrudes into the bore 21. At one end, the sensor 10 is supported by a mounting block 50 press fitted into an aperture at the end of the boss. The mounting block 50 is fluidically sealed in the bore 21 by an O-ring 34. At its other end, the sensor 10 is mounted by a friction fitted end cap 32 screwed into the end of the central bore of boss 23. When the sensor is mounted in this manner, the longitudinal axis of the sensor and the axis of movement for the actuated elements are coincident. In sensing movements of the actuated element it is seen that there is substantially no resistance to movement because of the lack of physical connections between the armature 30 and the sensor 10.

With respect now to Figure 2 the linear position sensor 10 is there illustrated in cross section. The sensor 10 includes the mounting block 50 of preferably permeable material which receives by an interference fit a generally cylindrical bobbin 60 in a recess thereof. The bobbin 60 is preferably manufactured of a non-conductive and nonmagnetic material such as a thermoplastic of the polyamide or polyimide type. The bobbin is partitioned into three separate sections by flanges which form winding spaces. In these spaces a plurality of coils 54, 56, and 58 are wound circumferentially by a conventional technique.

The coil 54 is wound from a number of turns of magnet wire and consists of multiple layers. Coil 54 forms a reference coil located adjacent the coil 56 termed a excitation coil. The excitation coil 56 is additionally multi-layered and wound with the equivalent number of turns of magnet wire as the reference coil. In the third partition or space of the bobbin 60 there is wound coil 58, forming a sensing coil. The sensing coil 58 is also formed from multiple turns of magnet wire and is of a length substantially equivalent to the linear position change to be measured. A magnetic field concentrator in the form of a metallic sleeve 52 surrounds the bobbin and coil assembly. The sleeve is retained by an interference fit between the bobbin and the rim of the recess in mounting block 50.

Within an inner bore of the bobbin 60 a cylindrical sleeve 62 of non-magnetic material is mounted to form an armature guide housing. The cylindrical sleeve 62 fits within a deeper recess in the mounting block 50 and concentrically locates a bore through the three coils 54, 56, and 58. The sleeve 62 is stopped at one end with a plug 64 to prevent contamination of the bore within the sleeve. The armature 30 which may be lubricated by the servc-fluid or otherwise, slides within this

inner bore and at an initial zero position is substantially positioned at one end of the sensing coil in the bore. At its fullest extension the armature 30 is substantially at the other end of the sensing coil 58. These positions correspond to the full range of movement of the actuated element.

Operationally, coil 56 is excited by an alternating waveform which produces an alternating magnetic field or flux surrounbding the coil 56. The magnetic path through sleeve 52, block 50 and permeable armature 30 tightly couples the flux to reference coil 54 to induce a voltage therein representative of the rate of change of that flux. The voltage developed by the reference coil is utilized to meaintain that rate of change substantially constant. The alternating magnetic field further induces a voltage in the sensing coil 58. The magnetic coupling of the field, however, is through sleeve 52 and armature 30 which varies in position. The voltage induced in the coil 58 is greater when more turns are magnetically coupled by the armature 30 and less when fewer turns are coupled. In tl.is manner, the voltage that the sensing coil generates is proportional to the number of turns into ·which the armature 30 has penetrated and hence the actuated element position.

As better illustrated in the cross-sectional end view in Figure 3, the coils are connected to outside circuitry via conductor leads 70, 72, 74, 76, 78, and 80. These conductor leads are wire wrapped around terminal posts, for example, 69-79 which are molded integrally with the end flange of the bobbin 60. Each coil is electrically connected to two of the terminal posts which thereafter are connected to the excitation and demodulator circuit via the conductor leads.

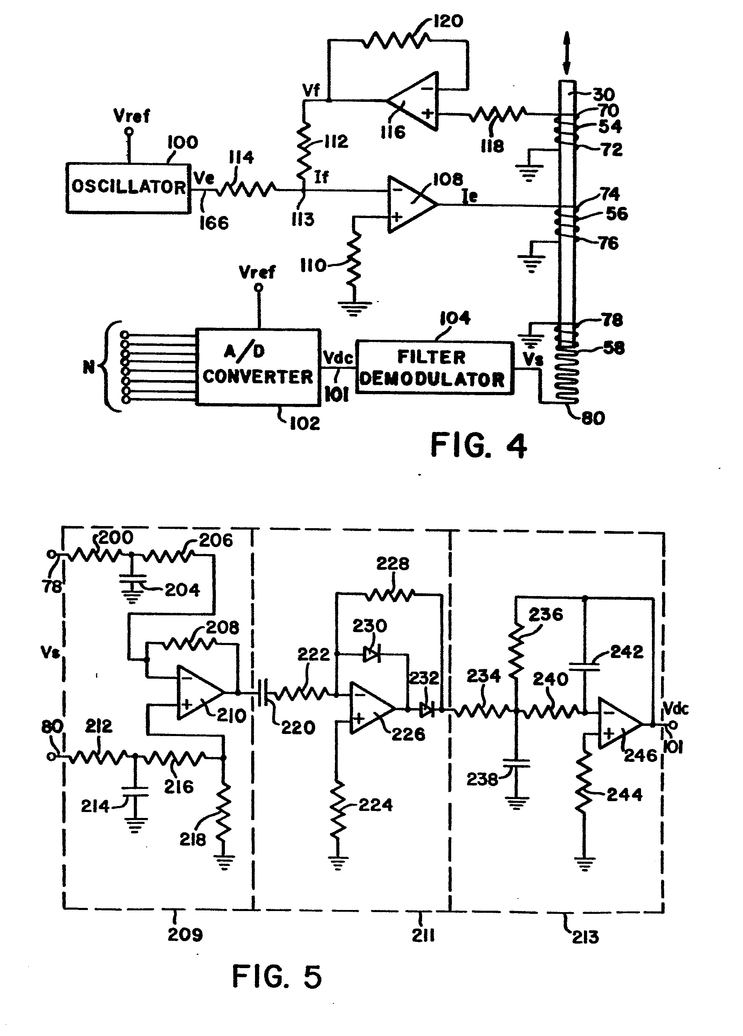

With respect now to Figure 4 there is shown an excitation and demodulator circuit for the linear position sensor illustrated in Figures 1, 2, and 3. The circuit provides an alternating excitation signal to the excitation coil 56 which induces a similar oscillation in sensing coil 58. The induced oscillation is modulated by movement of the armature 30, to be later demodulated and converted into a position measurement. The moving armature 30 is illustrated as disposed centrally within the coils 54, 56, and 58, which are shown schematically in the drawing. The reference coil 54 is connected at one terminal 72 to ground and at its other terminal 70 to the noninverting input of an operational amplifier 116 via an input resistor 118. The output of the operational amplifier 116 is fed back to the inverting input of the amplifier through a feedback resistor 120. An additional resistor 112 is connected between the output of the operational amplifier and a node 113.

In this configuration the operational amplifier 116 functions as a voltage follower maintaining a current through the resistor 112 to establish a voltage Vf at the output of the operational amplifier equivalent to the voltage input at its noninverting input. This control voltage is that developed by the reference coil 54 in response to excitation by coil 56. In this manner a feedback current If is transmitted to node 113 which is proportional to the voltage on the reference coil 54.

Further feeding the node 113 through a resistor 114 is an oscillator 100. The oscillator generates an excitation signal, Ve, which varies periodically between plus and minus values of a voltage reference Vref. The oscillator 100 may output the periodic signal as a square wave or triangular wave or other type of periodic oscillation. The excitation and feedback signal are mixed in the node 113 and input to the inverting input of an operational amplifier 108. The noninverting input of the operational amplifier 108 is grounded via resistor 110. The operational amplifier acts as an inverting current amplifier referenced to ground. The output of the amplifier 108 is an oscillating current signal Ie which feeds one terminal 74 of excitation coil 56. The other terminal 76 of the excitation coil 56 in this embodiment is grounded.

Operationally, the amplifier 108 acts to invert and amplify the excitation signal from the oscillator 100. Were it not for the feedback loop, the excitation signal would be amplified substantially. For example, in the preferred implementation, it is desirable for the open loop gain of amplifier 108 to be in excess of one hundred. The reference coil 54, however, senses the rate of change of the flux generated by the excitation coil 56 and generates the voltage Vf proportional thereto. The voltage is followed by amplifier 116 to produce the negative feedback current to node 113 and reduce the output of amplifier 108. The purpose of the negative feedback is to insure that an amount of flux change is generated by coil 56 to provide the commanded voltage from coil 54.

- 8 -

If the flux rate of change is reduced for some reason, then the feedback current is reduced and the output of amplifier 108 is increased. The increased output causes the signal input to amplifier 108 to increase and bring the flux change rate value back to the desired amount. An increase in flux rate of change from coil 56 in excess of the predetermined value will additionally be sensed by coil 54. The excess flux change will increase the voltage induced in the reference coil 54 and increase the feedback signal. The larger feedback signal will reduce the output of amplifier 108 and the signal Ie applied to the coil 56. This action causes a reduction in the flux rate of change generated to the predetermined value.

Thus, the circuit will generate a flux change value from the excitation coil 56 even in view of changes in temperature which varies the resistance of the coil winding, manufacturing variations in the winding process which varies the inductance of the coil, and frequency drift of the oscillator which varies the excitation signal. This causes the position measurement to be substantially independent of these parameters.

The sensing coil 58 which receives the flux from coil 56 is grounded at one terminal 78 and is connected at its other terminal 80 to a filter and demodulator circuit 104 whose output feeds a conventional analog-to-digital (A/D) converter 102. The maximum digital count of the converter is related to a voltage, Vref, which is input to the A/D converter 102 as a reference voltage. Preferably, the reference voltages of the oscillator and the A/D converter 102 are the same supply so that variations in the voltage to the oscillator will not create variations in the output of the A/D converter 102. In this manner these variations are eliminated from the circuit as a cause of distortion in the linear position measurement.

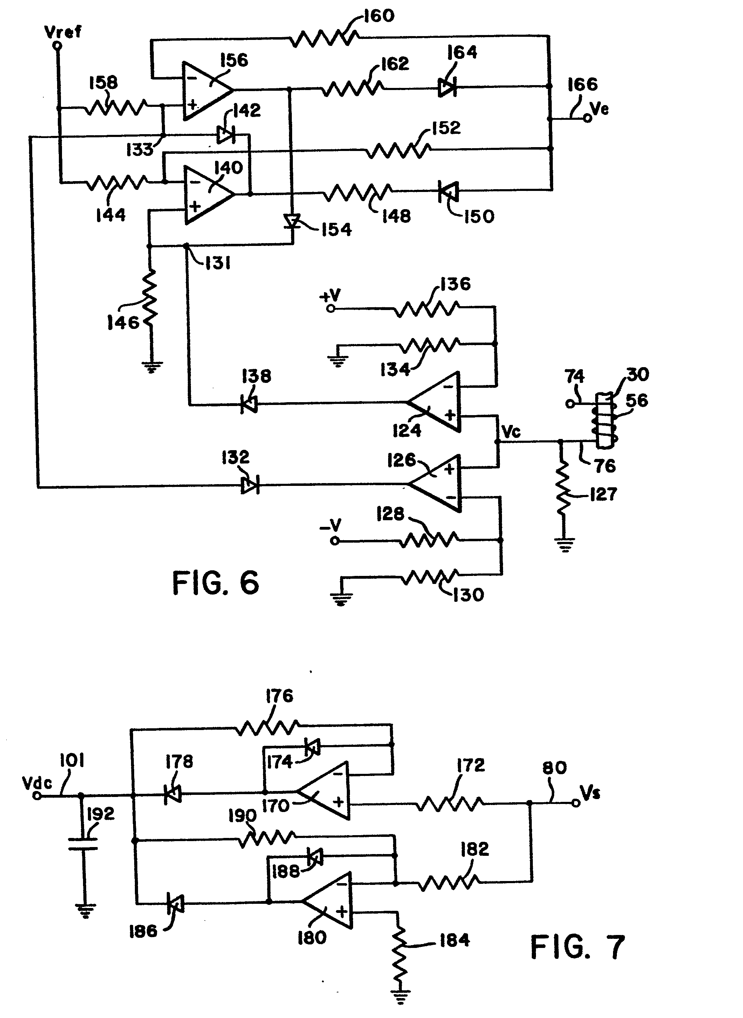

With respect now to Figure 6, there is shown a self-excited implementation of the oscillator 100. The oscillator includes an operational amplifier 124 acting as a positive comparator which has a positive reference voltage applied to its inverting input and a comparison voltage Vc applied to its non-inverting input. The positive reference voltage is developed at the junction of a pair of resistors 134, 136 connected between a positive voltage source +V and ground. The output of the amplifier 124 is fed through a diode 130 to a node 131.

Another operational amplifier 126, which acts as a negative comparator, receives the comparison voltage Vc at its noninverting input and a negative reference voltage at its inverting input. The negative reference voltage for amplifier 126 is developed at the junction of a pair of resistors 128 and 130 connected between a negative voltage source -V and ground. The output of the amplifier 126 is fed through a diode 132 to a node 133. The comparison voltage Vc is developed from the current flowing through a resistor 127 connected between the non-excited terminal of excitation coil 56 and ground. The voltage Vc, therefore, varies in phase with the alternating current induced in the coil by the excitation signal le.

Amplifier 140 is controlled by the output from amplifier 124 via node 131 connected to its noninverting input and additionally has its noninverting input connected to ground through a resistor 146. The inverting input of the amplifier 140 receives the voltage reference Vref via a resistor 144. The inverting input of the amplifier 140 is further connected to the output terminal 166 of the oscillator 100 via a resistor 152. The output of the amplifier 140 is connected to terminal 166 through series combination of a resistor 148 and a diode 150.

The noninverting input of an amplifier 156 in addition to being connected to the output of amplifier 126 by conode 133 is fed by the voltage reference, Vref, via resistor 158. The inverting input of the amplifier 156 is connected to the output terminal 166 via a resistor 160. The output of the amplifier 156 is transmitted to the output terminal 166 of the oscillator 100 via a series combination of resistor 162 and diode 164.

Cross connecting the two amplifiers 140, 156 is a pair of diodes 142 and 154. The diode 142 is connected between the output of the amplifier 140 and the noninverting input of the amplifier 156. The diode 142 poled to provide a negative voltage at that input when amplifier 140 saturates at a negative polarity. Similarly, diode 154 is connected between the output of amplifier 156 and the noninverting input of the amplifier 140. The diode 154 is poled to provide a positive voltage to that input when amplifier 156 saturates at a positive polarity.

The oscillator 100 generates a square wave output by taking the comparison voltage Vc provided by the resistor 127 and comparing it to the two reference voltages of amplifiers 124, and 126. A positive comparison voltage Vc in excess of the positive reference will produce a positive output from amplifier 124 through diode 138. A negative comparison voltage, Vc, less than the negative reference will, conversely, produce a negative output from amplifier 126 through diode 132.

The amplifiers 140, 156, are cross connected such that without the interconnection of amplifiers 124, 126 they would form a bistable device saturated at one polarity. Amplifier 140 would invert reference voltage Vref to produce a negative output an amplitude proportional to Vref times its gain at terminal 166. The negative voltage from the output of amplifier 140 would additionally be presented at the noninverting input of amplifier 156 to keep it from producing a positive output. In this state, any negative output of the amplifier 156 would be blocked by reversed biased diodes 154, 164. Conversely, in the reverse state of the oscillator, amplifier 156 will generate a positive voltage to the terminal 166 of a magnitude proportion to Vref times its gain. In this state the output of amplifier 156 will be transmitted to the noninverting input of amplifier 140 through diode 154 to keep its output from going negative. In this state any positive output of amplifier 140 is blocked by reversed biased diodes 142 and 150.

The amplifiers 124, 126 act to trigger a transition between these states whenever the reference voltages are exceeded by the comparison voltage Vc. Since the comparison voltage Vc is induced in coil 56 and consequently, in resistor 127, by the excitation signal Ie, the oscillator 100 will self-oscillate. For example, a positive voltage transition at terminal 166 from amplifier 156 will cause the current amplifier 108 to induce a negative polarity current in coil 56 which is sensed by resistor 127. As soon as this negative going voltage exceeds the negative threshold, amplifier 156 is switched into a negative state by the trigger from amplifier 126. This response releases the holding voltage on the amplifier 140 through diode 154 and it too, will switch negative. The negative polarity output of amplifier 140 will thereafter cause a positive going excitation current Ic to be applied to coil 56. When this positive going voltage exceeds the threshold for amplifier 124 the resultant trigger voltage output will switch amplifier 140 back into positive conduction. A further result is a positive going output from amplifier 156 because the blocking voltage through diode 142 has been removed from the noninverting input. This self-induced cyclic operation will continue at a frequency dependent upon the inductive time delay of the switching signals.

This self-induced oscillator has been illustrated as a square wave generator but could just as easily output either a sinusoidal or triangular excitation signal. A triangular generator is available by replacing resistors 152, 160 with integrating capacitors in the feedback loops of the switching amplifiers 140, 156.

A preferred implementation for the filter and demodulator circuit 104 is illustrated in Figure 5. In this Figure the sensing coil 58 is connected at terminal 78 to a series combination of resistors 200 and 206. The resistors 200 and 206 are further connected to the inverting input of an operational amplifier 210. Connecting the other terminal 80 of the sensing coil 58 to the noninverting input of the amplifier 210 is a series combination of resistors 212 and 216. The series combination resistors 200 and 206 have connected between ground and their junction point a filter capacitor 204. Similarly, the series combination of resistors 212 and 216 have connected between ground and their junction point a filter capacitor 214. The amplifier 210 is referenced to ground by connecting a resistor 218 between the noninverting input of the amplifier and ground. Feedback for the amplifier is provided by connecting a resistor 208 between the amplifier output and the inverting input.

In this configuration the amplifier 210 and circuitry within the dotted lined area 209 act as a differential amplifier with a gain of one to provide buffering for the sensine coil 58. Series resistors 200, 206; series resistors 212, 216 therefore have approximately the same value as resistence 208. In this manner the high input impedance of the inverting and noninverting inputs will not load the sensing coil 58. Noise or other spurious signals which are much higher in frequency than the alternating signal Vs will be filtered out by the capacitors 204 and 214 which act in conjunction with resistors 200 and 212, respectively as low pass filters. The alternating output of the differential amplifier 209 is capacitively coupled to the inverting input of operational amplifier 226 via resistor 222 and a coupling capacitor 220. The amplifier 226 additionally has its inverting input connected to its output via a resistor 228 and parallel connection of diodes 230 and 232. The amplifier is referenced to ground by connecting a resistor 224 between ground and its noninverting input.

Configured thusly, the operational amplifier 226 and circuitry contained in dotted line area 211 form a halfwave rectifier. The rectifier passes negative half cycles and blocks positive half cycles of Vs. Thus, the alternating wave form Vs from the sensing coil 58 is first buffered and thereafter rectified by the halfwave rectifier 211 before input to the filter portion of the circuit.

The filter portion comprises a two-pole active filter including an operational amplifier 246 and the circuitry contained in dotted line area 213. The amplifier 246 has a series connection of resistors 234 and 240 connected between the output of the amplifier 226 and the inverting input of the amplifier 246. Connected between the junction of the resitors 234, 240 and ground is a capacitor 238. The capicitor 238 provides an initial break point or pole of the filter. Active feedback for the filter 213 is provided by the connection of a capacitor 242 between the output of the amplifier 246 and the inverting input and further the connection of a resistor 236 between the amplifier output and the junction of resistors 234 and 240. The values of the resistor 236 and capacitor 242 provide the second pole filter and the amount of signal roll off per decade of frequency desired. In the preferred embodiment it is desired that the breakpoint be approximately 50 hertz and the roll off be at least 40 db per decade.

The filter and demdulator circuit thus converts the alternating sensing voltage Vs into a DC signal, Vdc, with an amplitude proportional to the amplitude of the signal Vs.

With reference now to Figure 7 there is shown a second implementation of the demodulation and filter circuit 104 illustrated in Figure 4. A demodulator part of the circuit comprises in part an operational amplifier 170 with its noninverting input connected to the output terminal 57 of the sensing coil 58 via a resistor 172. The amplifier 170 additionally has its inverting input connected to its output via the parallel combination of diodes 174, 178, and a resistor 176. The output of the amplifier 170 is further fed to one terminal of a filter capacitor 192 which is grounded at its other terminal. The voltage produced across capacitor 192 is transmitted to terminal 101 to become the DC position signal input to A/D converter 102.

A second part of the demodulator comprises an operational amplifier 180 having its noninverting input connected to ground via resistor 184. The inverting input of the amplifier 180 is connected to the output terminal 57 of the coil 104 via a resistor 182. The inverting input is also connected to the amplifier output via the parallel connection of diodes 188, 186 and a resistor 190. The output of the amplifier 180 is connected to the signal terminal of capacitor 192 via the diode 186.

Configured in this manner the two amplifiers 170 and 180 form the positive and negative legs of a full wave rectifier. These legs rectify the positive and negative excursions of the alternating voltage generated by the sensing coil 58 into a pulsating DC voltage which is filtered by the capacitor 192 before being output to the A/D converter 102 as signal Vdc. After filtering the DC voltage across the capacitor is proportional to the amplitude of the position signal Vs.

The rectification is accomplished by applying positive half cycles to the amplifier 170 which transmits them directly to the capacitor 192 according to the gain relationships of the resistors 176 and 172. Conversely, positive half cycles output from the sensing coil 58 are inverted in amplifier 180 and blocked by diode 186.

The negative output of the amplifier 180 on positive half cycles is further fed back through diode 188 to reduce the gain of the amplifier to one. On negative half cycles of the signal from sensing coil 58 just the opposite operation occurs such that negative half cycles are blocked from transmission to the capacitor 192 by the diode 178. Further, the negative half cycles when amplified by the amplifier 170 are fed back through diode 174 to reduce the gain of the amplifier to one. However, negative half cycles input to amplifier 180 are inverted and passed directly to the capacitor 192 with a gain which is the ratio of the resistors 190 to 182.

CLAIMS

1. A linear position sensor (10) characterized by:

an excitation coil (56), disposed around a movable armature (30), which has applied an alternating excitation signal (Ie) thereto;

a reference coil (54), further disposed around said armature (30) and tightly coupled magnetically to said excitation coil (56) for sensing the rate of change of flux generated by said excitation coil (56);

means (108, 116), responsive to the feedback signal (If) of said reference coil (56), for varying the excitation signal (Ie) such that the rate of change of flux produced by said excitation coil (56) remains substantially constant;

a sensing coil (58) adapted to reveive said movable armature (30) and generate a positional signal (Vs) proportional to the number of turns penetrated by said armature (30); and

means (104) for demodulating said position signal (Vs) into a DC voltage (Vdc) proportional to the position of the armature (30).

2. A linear position sensor as defined in claim 1 characterized in that it further includes:

analog-to-digital converter means (102) for converting said DC voltage (Vdc) into a digital number (N).

3. A linear position sensor as defined in claim 2, charactezed in that:

said alternating excitation signal (Ie) is generated by an oscillator which has a peak voltage (Ve) related to a reference voltage (Vref); and

said analog-to-digital converter means (102) has a maximum digital number (N) related to said reference voltage (Vref);

wherein changes in said reference voltage (Vref) will not cause measurement errors in the position signal.

4. A linear position sensor as defined in claim 1, wherein said means (116, 108) for varying the excitation signal is characterized in that:

means (108) for amplifying the excitation signal, electrically connected between said excitation signal (Ve) and said excitation coil (56); and

means (116) for varying the gain of said amplifying means (108) in response to said feedback signal.

5. A linear positioin sensor as defined in claim 4, wherein said amplifying means (108) is characterized by:

an operational current amplifier (108) having its noninverting input (+) referenced to ground through an impedance (11)) having its inverting input (-) connected to a signal node (113), and having its output (Ie) connected to one terminal (74) of said excitation coil (56);

wherein an inverted current excitation (Ie) is applied to coil (56) proportional to an excitation signal (Ve) input to said signal node (113).

6. A linear position sensor as defined in claim 5, wherein said means for varying the gain is characterized by:

a voltage follower (116), and a first resistor, said follower (116) connected between said reference coil (54) and one terminal of said resistor (112) which has its other terminal connected to said signal node (113) said follower (116) generating a feedback voltage proportional to the feedback signal from the coil (54) and said resistor (112) inputting a current (If) to said signal node (113) proportional to said feedback voltage; and

said excitation signal (Ve) coupled to said signal node (113) through a second resistor (114) to generate an input current (Ia) proportional to the excitation;

said node (113) combining the feedback current (If) and the input current (Ia) to generate said excitation current (Ie).

7. A linear position sensor as defined in claim 6, wherein said voltage follower (116) is characterized by:

an operational amplifier (116) having its noninverting input (+) connected to one terminal (70) of said reference coil (54) through an impedance (118), and having its output connected to its inverting input (-) through an impedance (120), and further connected to said first resistor (112).

8. A linear position sensor as defined in claim 1, wherein said demodulator circuit is characterized by:

a differential buffer amplifier (209) receiving said positional signal (Vs) and transmitting the same without substantially changing the amplitude of said position signal;

a half-wave rectifier for converting said position signal into a pulsating DC signal (211); and

and an active filter (213) for smoothing the pulsations out of said pulsating DC signal.

9. A linear position sensor as defined in claim 1, wherein said demodulator circuit is characterized by:

a full-wave rectifier (170, 180) for converting said position signal into a pulsating DC signal; and

a filter capacitor (192) connected to the output of said full-wave rectifier (170, 180) for smoothing the pulsations out of said pulsating DC signal.

10. A linear position sensor characterized by:

an elongated nonmagnetic bobbin (60) having a central bore along the longitudinal axis of said bobbin (60) and having a first, a second, and a third winding space separated by radially extending flanges;

a reference coil (54) wound circumferentially around the bobbin (60) in said first winding space;

an excitation coil (56) wound circumferentially around the bobbin (60) in said second winding space, substantially equivalent in coil turns as said reference coil (54) and magnetically coupled thereto for generating a substantially constant flux rate;

a sensing coil (58) wound circumferentially around the bobbin (60) in said third winding space;

a magnetically permeable sleeve (62) circumferentially encasing said bobbin (60) and coils (54, 56, 58) for concentrating the magnetic flux from said excitation coil (56); and

a magnetically permeable armature (30) inserted in said central bore and moveable between one end of said sensing coil (58) and the other end of sensing coil (58); said armature (30) physically connected to an actuated element (20) whose position is to be measured;

the movements of said armature (30) magnetically coupling the penetrated turns of the sensing coil to said excitation coil.

0074301

1/3

CONTROLLER

FIG. 1

FIG. 2

FIG. 3

0074301

FIG. 4

FIG. 5

FIG. 6

FIG. 7